# EUROPEAN PATENT SPECIFICATION

(11) **EP 2 086 131 B1**
(45) Date of publication and mention of the grant of the patent: **02.04.2014**
(21) Application number: 08290097.8
(22) Date of filing: 04.02.2008
(51) Int. Cl.: H04B 10/556

(54) **Method for optimizing signal transmission in an optical network**
Verfahren zur Optimierung der Signalübertragung in einem optischen Netzwerk
Procédé d'optimisation de la transmission de signal dans un réseau optique

(43) Date of publication of application: 05.08.2009
(73) Proprietor: Alcatel Lucent, 75007 Paris (FR)
(72) Inventor: Zami, Thierry, 91300 Massy (FR); Bayart, Dominique, 92140 Clamart (FR)
(74) Representative: Croonenbroek, Thomas Jakob

(56) References cited:
- EP-A- 1 585 237
- EP-A- 1 832 914
- WO-A-2007/103669
- US-A1- 2007 183 791

## Description

### BACKGROUND OF THE INVENTION

The present invention relates to the field of signal transmission in optical communication networks.

Recent evolutions of the optical networks mainly concern the development of transparent or semi-transparent networks. Transparent networks refer to networks where signal transmission is achieved in the optical domain along the entire path. This type of networks allows to reduce the number of optoelectronic devices required for signal regeneration and therefore reduces the global cost of the network. Nevertheless, in order to ensure connectivity while optimizing network resources in transparent networks, signal settings such as signal wavelength, bit rate or modulation rate need to be optimized.

EP 1 585 237 offers a method to convert a Differential Phased Shift Keying (DPSK) signal into a Phase Shaped Binary Transmission (PSBT) signal thanks to the use of a module comprising an optical delay filter. Document US 20070183791 refers to the use of filtering elements to select between an Non Return to Zero (NRZ) and an optical duobinary (ODB) modulation format. Besides, document EP 1832914 discloses an optical wavelength selective switch based on liquid crystal on silicon which enables selecting the wavelength of a transmitted light.

### SUMMARY OF THE INVENTION

One object of the present invention is to provide agile elements capable of modifying transmission signal settings, especially to provide modulation format flexibility. Another object of the invention is to offer an inexpensive way to adjust signal modulation formats.

This adjustment is achieved by a method for optimizing signal transmission in an optical network wherein the transfer function of a filtering component is selectively configured in order to adapt signals modulation format to the transmission requirements.

Said filtering component comprises Wavelength Selective Switches (WSSs) based on Liquid Crystal on Silicon (LCOS) switching elements.

Advantageously, the transmission requirements comprise the available bandwidth along the path, the required bit-rate, the length of the path.

Preferably, the modulation formats comprise a Phase Shaped Binary Transmission (PSBT) format and a Differential Phased Shift Keying (DPSK) format.

Advantageously, the input signal of the Wavelength Selective Switches (WSSs) based on Liquid Crystal on Silicon (LCOS) switching elements has a Differential Phased Shift Keying (DPSK) format and the output signal of the Wavelength Selective Switches (WSSs) based on Liquid Crystal on Silicon (LCOS) switching elements has either a Differential Phased Shift Keying (DPSK) or a Phase Shaped Binary Transmission (PSBT) format depending on the selected filtering transfer function.

Alternatively, the Wavelength Selective Switches (WSSs) based on Liquid Crystal on Silicon (LCOS) switching elements arc used non only to produce modulation format agility but also to perform the wavelength multiplexing between the different Wavelength Division Multiplexing (WDM) channels.

Furthermore, optical device comprising a filtering transfer function characterized in that said filtering transfer function is used to select a modulation format.

Alternatively, the modulation formats comprise a Phase Shaped Binary Transmission (PSBT) format and a Differential Phased Shift Keying (DPSK) format.

Preferably, said optical device comprises Wavelength Selective Switches (WSSs) based on Liquid Crystal on Silicon (LCOS) switching element.

Advantageously, the input signal of the Wavelength Selective Switches (WSSs) has a Differential Phased Shift Keying (DPSK) format and the output signal of the Wavelength Selective Switches (WSSs) is either a Differential Phased Shift Keying (DPSK) or a Phase Shaped Binary Transmission (PSBT) format depending on the selected filtering transfer function.

### BRIEF DESCRIPTION OF THE DRAWINGS

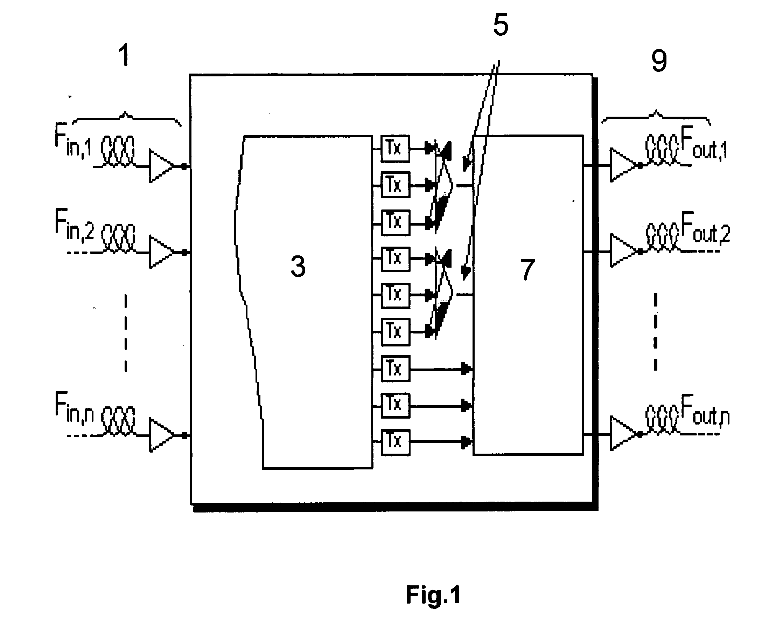

FIG.1 is a diagram of a network cross-connect;

### DETAILED DESCRIPTION OF THE INVENTION

As used herein, the term "ingress node" refers to the source network node where the optical signal is created and transmitted to the network optical fibers.

As used herein, the term "egress node" refers to the destination network node where the optical signal is received and converted to electrical signal in order to be processed.

The present invention refers to a method for adjusting the modulation rate of an optical signal allowing a higher flexibility of the network. In a transparent optical network such adjustment is needed at the ingress node to optimize signal transmission according to the requested connection. The idea is to use an optical filtering component allowing the modification of its transfer function in order to provide modulation format agility. One way to achieve this goal is to use Liquid Crystal on Silicon Wavelength Selective Switches (LCOS-WSSs). Such switches arc commercially available from Engana Pty Ltd, Australia and their detailed description of structure and functioning is given in the patents WO2006/034533 and W02005/047942. In these switches, the application of an electric current produces a change of orientation of the liquid crystal molecules and therefore a modification of the refraction index of the material. Thus, the selection of a suitable refraction index allows the selection of the reflected wavelength. In an embodiment, the present invention uses the filtering properties of the liquid crystal for modulation format selection. In addition, it may be used simultaneously for wavelength selective switching functions. LCOS-WSSs being already implemented in optical networks, this embodiment offers a cost-reduced way to realize modulation format agility. Said LCOS-WSSs are located in network cross-connects.

To better understand an embodiment of the invention, Fig.1 represents a network cross-connect located in a network node. Optical signals coming from other nodes are received through input fibers 1 of the cross-connect element. These input signals are either converted to electrical signal and processed if the current node is their egress node or transmitted to an output fiber 9 thanks to a patch panel 7. A request can also be made to current node to establish a connection with a remote node. In this case, the optimal path is determined by a "control plane" entity. This determination is made in function of the request features (length of the selected path, requested bitrate...), the network availability and the adjustable transmission parameters (channel wavelength...). Said adjustable transmission parameters provide network flexibility and allow increasing network capabilities. The present invention offers to use a feature of the LCOS-WSSs 5 to adjust the modulation format of the emitted optical signal. This feature refers to the possibility to modify the filtering transfer function of said LCOS-WSS 5.

On Fig.1, the signals needed to be sent by the electrical router 3 arc converted to optical signals by transmitters (Tx) comprising laser sources and transmitted to the LCOS-WSS 5. Said optical signals received by the LCOS-WSSs 5 have originally a Differential Phased Shift Keying (DPSK) modulation format. Due to the filtering agility of the liquid crystal matrix, said WSSs can either transmit optical signals keeping the same modulation format or convert said optical signal to a Phase Shaped Binary Transmission (PSBT) modulation format by applying a delay filter or a filter configured to approximate the delay filter known in the prior art, e.g. in the form of a second order Gaussian filter. The DSPK format allows a longer transparent transmission but requires a larger spectral bandwidth than the PSBT format. Thus, in function of the features of the selected path, the electrical router adjusts the LCOS-WSS configuration to be optimal.
At the output of the LCOS-WSSs, optical signal having either a PSBT or a DPSK modulation format arc sent to the optical patch panel 7 to be oriented and transmitted to an output fiber 9. Said signals are then transmitted through the network to their egress nodes.

Thus, the present embodiment uses the filtering-agility feature of the LCOS-WSS to allow modulation rate format selection. This new application of an existing network component increases network flexibility and capacity without increasing cost. Moreover, it solves the problem of finding the fair ratio of DPSK and PSBT transceivers to be installed at the beginning of life of the network to meet future evolutions of the demands.

## Claims

1. Method for optimizing signal transmission in an optical network wherein the transfer function of a filtering component is selectively configured in order to adapt signals modulation format to the transmission requirements, **characterized in that** said filtering component comprising Wavelength Selective Switches -WSSs- based on Liquid Crystal on Silicon -LCOS-switching elements (5) which are configured to modify their refraction index according to an applied electric current, signal modulation format being adapted by a modification of the refraction index of the Wavelength Selective Switches-WSSs based on Liquid Crystal on Silicon-LCOS-switching elements (5).

2. Method for optimizing signal transmission in optical network in accordance with claim 1, **characterized in that** the transmission requirements comprise the available bandwidth along the path, the required bit-rate, the length of the path.

3. Method for optimizing signal transmission in optical network in accordance with one of the previous claims, **characterized in that** the modulation formats comprise a Phase Shaped Binary Transmission -PSBT- format and a Differential Phased Shift Keying -DPSK- format.

4. Method for optimizing signal transmission in optical network in accordance with claim 3, **characterized in that** the input signal of the Wavelength Selective Switches based on Liquid Crystal on Silicon switching elements (5) has a Differential Phased Shift Keying format and the output signal of the Wavelength Selective Switches based on Liquid Crystal on Silicon switching elements (5) has either a Differential Phased Shift Keying or a Phase Shaped Binary Transmission format depending on the selected filtering transfer function.

5. Method for optimizing signal transmission in optical network in accordance with claim 4 **characterized in that** the Wavelength Selective Switches based on Liquid Crystal on Silicon switching elements (5) are used non only to produce modulation format agility but also to perform the wavelength multiplexing between the different Wavelength Division Multiplexing -WDM- channels.

6. Optical device comprising a filtering transfer function **characterized in that** said optical device comprises Wavelength Selective Switches -WSSs- based on Liquid Crystal on Silicon -LCOS- switching element (5) and that said optical device is configured in a way that said filtering transfer function allows to select a modulation format by applying an electric current to produce a modification of the refraction index of the Wavelength Selective Switches -WSSs- based on Liquid Crystal on Silicon -LCOS- switching element (5).

7. Optical device comprising a filtering transfer function in accordance with claim 6 **characterized in that** the modulation formats comprise a Phase Shaped Binary Transmission format and a Differential Phased Shift Keying format.

8. Optical device comprising a filtering transfer function in accordance with claim 7 **characterized in that** the input signal of the Wavelength Selective Switches based on Liquid Crystal on Silicon switching element (5) has a Differential Phased Shift Keying format and the output signal of the Wavelength Selective Switches is either a Differential Phased Shift Keying or a Phase Shaped Binary Transmission format depending on the selected filtering transfer function.

## Patentansprüche

1. Verfahren zur Optimierung der Signalübertragung in einem optischen Netzwerk, wobei die Übertragungsfunktion einer Filterkomponente selektiv konfiguriert ist, um das Modulationsformat der Signale an die Übertragungsanforderungen anzupassen, **dadurch gekennzeichnet, dass** die besagte Filterkomponente auf Flüssigkristall-auf-Silizium- bzw. LCOS-Schaltelementen (5), welche für die Modifizierung ihres Brechungsindexes gemäß einem angelegten elektrischen Strom konfiguriert sind, basierende wellenlängenselektive Schalter WSSs umfasst, wobei das Signalmodulationsformat mittels einer Modifizierung des Brechungsindexes der auf Flüssigkristall-auf-Silizium- bzw. LCOS-Schaltelementen (5) basierenden wellenlängenselektiven Schalter WSSs angepasst wird.

2. Verfahren zur Optimierung der Signalübertragung in einem optischen Netzwerk nach Anspruch 1, **dadurch gekennzeichnet, dass** die Übertragungsanforderungen die auf dem Pfad verfügbare Bandbreite, die erforderliche Bitrate und die Länge des Pfads umfassen.

3. Verfahren zur Optimierung der Signalübertragung in einem optischen Netzwerk nach einem der vorstehenden Ansprüche, **dadurch gekennzeichnet, dass** die Modulationsformate ein Binärübertragungsformat mit geglättetem Phasenverlauf bzw. PSBT-Format und ein differenzielles Phasenumtastungs- bzw. DPSK-Format umfassen.

4. Verfahren zur Optimierung der Signalübertragung in einem optischen Netzwerk nach Anspruch 3, **dadurch gekennzeichnet, dass** das Eingangssignal der auf Flüssigkristal-auf-Silizium-Schaltelementen (5) basierenden wellenlängenselektiven Schalter ein differenzielles Phasenumtastungsformat aufweist und das Ausgangssignal der auf Flüssigkristal-auf-Silizium-Schaltelementen (5) basierenden wellenlängenselektiven Schalter in Abhängigkeit von der ausgewählten Filterübertragungsfunktion entweder ein differenzielles Phasenumtastungsformat oder ein Binärübertragungsformat mit geglättetem Phasenverlauf aufweist.

5. Verfahren zur Optimierung der Signalübertragung in einem optischen Netzwerk nach Anspruch 4, **dadurch gekennzeichnet, dass** die auf Flüssigkristal-auf-Silizium-Schaltelementen (5) basierenden wellenlängenselektiven Schalter nicht nur für das Bewirken einer Modulationsformatflexibilität, sondern auch für das Durchführen von Wellenlängenmultiplex zwischen unterschiedlichen Wellenlängenmultiplex- bzw. WDM-Kanälen verwendet werden.

6. Optische Vorrichtung mit einer Filterüberkragungsfunktion, **dadurch gekennzeichnet, dass** die besagte optische Vorrichtung auf Flüssigkristal-auf-Silizium- bzw. LCOS-Schaltelementen (5) basierende wellenlängenselektive Schalter WSSs umfasst, und dass die besagte optische Vorrichtung derart konfiguriert wird, dass die besagte Filterübertragungsfunktion das Auswählen eines Modulationsformats durch Anlegen eines elektrischen Stroms, um eine Modifizierung des Brechungsindexes der auf Flüssigkristal-auf-Silizium- bzw. LCOS-Schaltelementen (5) basierenden wellenlängenselektiven Schalter WSSs zu bewirken, ermöglicht.

7. Optische Vorrichtung mit einer Filterübertragungsfunktion nach Anspruch 6, **dadurch gekennzeichnet, dass** die Modulationsformate ein Binärübertragungsformat mit geglättetem Phasenverlauf und ein differenzielles Phasenumtastungsformat umfassen.

8. Optische Vorrichtung mit einer Filterübertragungsfunktion nach Anspruch 7, **dadurch gekennzeichnet, dass** das Eingangssignal der auf Flüssigkristal-auf-Silizium-Schaltelementen (5) basierenden wellenlängenselektiven Schalter ein differenzielles Phasenumtastungsformat aufweist und das Ausgangssignal der wellenlängenselektiven Schalter in Abhängigkeit von der ausgewählten Filterübertragungsfunktion entweder ein differenzielles Phasenumtastungsformat oder ein Binärübertragungsformat mit geglättetem Phasenverlauf ist.

## Revendications

1. Procédé d'optimisation de la transmission d'un signal dans un réseau optique, selon lequel la fonction de transfert d'un composant de filtrage est configurée de manière sélective afin d'adapter le format de modulation des signaux aux exigences de transmission, **caractérisé en ce que** ledit composant de filtrage comprend des commutateurs sélectifs en longueur d'onde, WSS, à base d'éléments de commutation (5) en cristaux liquides sur silicium, LCOS, qui sont configurés pour modifier leur indice de réfraction en fonction d'un courant électrique appliqué, le format de modulation du signal étant adapté par une modification de l'indice de réfraction des commutateurs sélectifs en longueur d'onde, WSS, à base d'éléments de commutation (5) en cristaux liquides sur silicium, LCOS.

2. Procédé d'optimisation de la transmission d'un signal dans un réseau optique selon la revendication 1, **caractérisé en ce que** les exigences de transmission comprennent la largeur de bande disponible le long du trajet, le débit binaire requis, la longueur du trajet.

3. Procédé d'optimisation de la transmission d'un signal dans un réseau optique selon l'une des revendications précédentes, **caractérisé en ce que** les formats de modulation comprennent un format de transmission binaire avec mise en forme de phase, PSBT, et un format de modulation par déplacement de phase différentielle, MDP différentielle.

4. Procédé d'optimisation de la transmission d'un signal dans un réseau optique selon la revendication 3, **caractérisé en ce que** le signal d'entrée des commutateurs sélectifs en longueur d'onde à base d'éléments de commutation (5) en cristaux liquides sur silicium présente un format de modulation par déplacement de phase différentielle et le signal de sortie des commutateurs sélectifs en longueur d'onde à base d'éléments de commutation (5) en cristaux liquides sur silicium présente soit un format de modulation par déplacement de phase différentielle, soit un format de transmission binaire avec mise en forme de phase, suivant la fonction de transfert par filtrage sélectionnée.

5. Procédé d'optimisation de la transmission d'un signal dans un réseau optique selon la revendication 4, **caractérisé en ce que** les commutateurs sélectifs en longueur d'onde à base d'éléments de commutation (5) en cristaux liquides sur silicium sont utilisés non seulement pour produire l'agilité en format de modulation, mais aussi pour effectuer le multiplexage de longueur d'onde entre les différentes voies de multiplexage par division de longueur d'onde.

6. Dispositif optique comprend une fonction de transfert par filtrage **caractérisé en ce que** ledit dispositif optique comprend des commutateurs sélectifs en longueur d'onde, WSS, à base d'éléments de commutation (5) en cristaux liquides sur silicium, LCOS, et **en ce que** ledit dispositif de commutation est configuré de telle sorte que ladite fonction de transfert par filtrage permet de sélectionner un format de modulation en appliquant un courant électrique afin de produit une modification de l'indice de réfraction des commutateurs sélectifs en longueur d'onde, WSS, à base d'éléments de commutation (5) en cristaux liquides sur silicium, LCOS.

7. Dispositif optique comprend une fonction de transfert par filtrage selon la revendication 6, **caractérisé en ce que** les formats de modulation comprennent un format de transmission binaire avec mise en forme de phase et un format de modulation par déplacement de phase différentielle.

8. Dispositif optique comprend une fonction de transfert par filtrage selon la revendication 7, **caractérisé en ce que** le signal d'entrée des commutateurs sélectifs en longueur d'onde à base d'éléments de commutation (5) en cristaux liquides sur silicium présente un format de modulation par déplacement de phase différentielle et le signal de sortie des commutateurs sélectifs en longueur d'onde présente soit un format de modulation par déplacement de phase différentielle, soit un format de transmission binaire avec mise en forme de phase, suivant la fonction de transfert par filtrage sélectionnée.
